# EUROPÄISCHE PATENTSCHRIFT

(11) **EP 3 164 830 B1**
(45) Veröffentlichungstag und Bekanntmachung des Hinweises auf die Patenterteilung: **18.11.2020**
(21) Anmeldenummer: 15750625.4
(22) Anmeldetag: 02.07.2015
(51) Int. Cl.: G06K 9/20, A01K 29/00

(54) **VERFAHREN ZUR VISUELLE ERFASSUNG SCHLACHTTIERBEZOGENER DATEN AN EINEM SCHLACHTTIER**
METHOD FOR VISUAL DETECTION OF ANIMAL RELATED DATA FROM A SLAUGHTERHOUSE ANIMAL
PROCÉDÉ DE DÉTECTION VISUELLE DE DONNÉES, RELIÉES A UN ANIMAL, D'UN ANIMAL D'ABATTOIR

(30) Priorität: 02.07.2014 DE 102014009686
(43) Veröffentlichungstag der Anmeldung: 10.05.2017
(73) Patentinhaber: CSB-System AG, 52511 Geilenkirchen (DE)
(72) Erfinder: SCHIMITZEK, Peter, 52511 Geilenkirchen (DE)
(74) Vertreter: Weihrauch, Frank
(86) Internationale Anmeldenummer: PCT/DE2015/000332
(87) Internationale Veröffentlichungsnummer: WO 2016/000676

(56) Entgegenhaltungen:
- EP-A1- 1 212 939
- WO-A1-99/33021
- WO-A1-03/003820
- WO-A1-2011/021193
- DE-A1- 19 502 689

## Beschreibung

Die Erfindung betrifft ein Verfahren zur Erfassung schlachttierbezogener Daten, insbesondere zur Erfassung vorhandener Markierungen, an einem Schlachttier.

In der Züchtung und Verarbeitung von Schlachttieren, wie z.B. offenbart im DE19502689 oder WO03/003820, insbesondere von Schlachtschweinen werden die Schlachttiere häufig mit Markierungen versehen, welche als alphanumerische, numerische oder Buchstabenfolge oder sonstige Zeichen vorliegen können und bespielsweise aufgestempelt oder aufgedruckt werden.

Die Markierungen können beispielsweise Auskunft über den Zuchtbetrieb, das Alter oder das Geschlecht des Schlachttieres geben.

Insbesondere bei der Schlachtschweinzüchtung und -verarbeitung ist es in der Regel vorgesehen, dass Eber vor dem Verkauf an den Schlachtbetrieb gekennzeichnet werden. Dies dient zum einen der Kalkulierung des Verkaufserlöses des jeweiligen Schlachtschweins, da bei Ebern meist eine schlechtere Ausschlachtung berücksichtigt werden muss. Zum anderen dient die Kennzeichnung zur Erkennung des Geschlechts des Schlachtschweins, um insbesondere eine Aussage hinsichtlich einer zu erwartenden Geruchsbelastung des Schlachtschweins durch den Ebergeruch und der entsprechenden Verarbeitung des Schlachtschweins zu ermöglichen.

Ferner ist es auch denkbar, dass die Markierungen erst während des Schlachtprozesses aufgebracht werden, wobei es sich bei einer solchen Markierung zum Beispiel um eine eindeutige Identifikationsmarkierung in Form einer Registrierungsnummer handeln kann.

Es kann erforderlich oder zweckmäßig sein, die an dem jeweiligen Schlachttier vorhandenen Markierungen während des Schlachttierverarbeitungsprozesses zu erfassen.

Gemäß dem Stand der Technik erfolgt eine Erfassung etwa vorhandener Markierungen in der Regel visuell durch entsprechendes Personal im Rahmen einer Eingangskontrolle im Schlachtbetrieb.
Die erfassten Markierungsdaten können anschließend manuell registriert und an eine Datenverarbeitung übermittelt werden.

Die manuelle Erfassung vorhandener Markierungen an einem Schlachttier hat jedoch insbesondere die Nachteile, dass zum einen ein entsprechendes Personal vorgesehen werden muss und dass daher ein erheblicher Zeitaufwand für die Erfassung und Übermittlung der Markierungsdaten anfällt sowie dass zum anderen Markierungen nicht zutreffend erkannt oder fehlerhaft erfasst werden.
Zudem können insbesondere bei der Übermittlung der Markierungsdaten an die Datenverarbeitung und -speicherung durch das Personal Fehler verursacht werden.

Im Hinblick auf die Nachteile des Standes der Technik besteht die Aufgabe der vorliegenden Erfindung darin, ein Verfahren zur Erfassung schlachttierbezogener Daten an einem Schlachttier bereitszustellen, welches eine automatisierte und gleichzeitig schnelle und effiziente Erfassung der Daten ermöglicht und welches zudem kostengünstig durchführbar ist.

Die Aufgabe wird durch ein Verfahren mit den im Patentanspruch 1 aufgeführten Merkmalen gelöst. Bevorzugte Weiterbildungen ergeben sich aus den Unteransprüchen.

Ein erfindungsgemäßes Verfahren zur Erfassung schlachttierbezogener Daten an einem Schlachttier wird vorliegend mittels einer Bilderfassungseinheit und einer Auswertungseinheit durchgeführt.
Die Erfassung erfolgt hierbei vorzugsweise zu Beginn des Schlachttierverarbeitungsprozesses, wobei das Schlachttier, in der Regel an einer Rohrbahn geführt, die Bilderfassungseinheit passiert. Dabei liegt das Schlachttier vorzugsweise bereits gespalten und damit in Form von Schlachttierhälften vor.

Die Bilderfassungseinheit weist vorliegend einen Bilderfassungsbereich auf, der von dem Schlachttier passiert wird. Das Passieren des Bilderfassungsbereichs erfolgt in der Art, dass der Bilderfassungseinheit eine rückseitige Oberfläche des Schlachttieres zugewandt ist, sodass Bildpunkte auf der rückseitigen Oberfläche des Schlachttieres erfassbar sind.

Als rückseitige Oberfläche eines Schlachttieres ist im Sinne dieser Erfindung bei einer Schlachttierhälfte die einer Spaltseite gegenüber befindliche Außenseite zu verstehen. Bei einem noch nicht in Schlachttierhälften gespalteten Schachttier ist als rückseitige Oberfläche zudem jede Oberfläche mit Schlachttierhaut zu verstehen.

Ferner ist die Bilderfassungseinheit erfindungsgemäß dazu in der Lage, Bildpunktdaten der Bildpunkte, insbesondere vorliegend als Flächen- oder Raumkoordinaten und Lichtintensitäts- oder Farbwerte der Bildpunkte, übertragbar bereitzustellen.
Die Auswertungseinheit ist vorliegend mit der Bilderfassungseinheit drahtgebunden oder drahtlos verbunden und dazu in der Lage, die Bildpunktdaten zu erfassen sowie anhand der Bildpunktdaten Markierungen auf der rückseitigen Oberfläche des Schlachttieres zu ermitteln.
Die ermittelbaren Markierungen liegen hierbei beispielsweise als Muster, grafische Zeichen, Farbzeichen, Schriftzeichen, Zahlencodes, Barcodes oder QR-Codes vor, welche im Vorfeld oder während des Schlachtprozesses zum Beispiel aufdruckt, aufgebrannt, aufetikettiert, aufgeschrieben oder mittels eines Stempels auf das Schlachttier aufgebracht wurden.

Die Erfassung der Markierungen durch die Auswertungseinheit erfolgt anhand einer Differenzierung zwischen den Licht- oder Farbwerten der Bildpunktdaten der Markierungen und den Licht- oder Farbwerten der Bildpunktdaten der übrigen Haut der rückseitigen Oberfläche.

Die Auswertungseinheit ist ferner dazu in der Lage, die erfassten Markierungen als speicherbares Erfassungsergebnis bereitzustellen, wobei eine Speicherung des Erfassungsergebnisses sowohl in der Auswertungseinheit selbst, als auch in einer externen Datenverarbeitungs- oder Datenspeicherungseinheit erfolgen kann.

Das erfindungsgemäße Verfahren weist die nachfolgenden Verfahrensschritte auf:
a) Erfassen der Bildpunkte auf der rückseitigen Oberfläche des Schlachttieres in dem Bilderfassungsbereich durch die Bilderfassungseinheit, wobei die Bildpunkte die Markierungen beinhalten,
b) übertragbares Bereitstellen der Bildpunktdaten der Bildpunkte durch die Bilderfassungseinheit,
c) Erfassen der Bildpunktdaten durch die Auswertungseinheit,
d) Zuordnen eines Schlachttieridentifikationscodes zu den Bildpunktdaten,
e) Bereitstellen der Markierungen als speicherbares Erfassungsergebnis mit zugeordnetem Schlachttieridentifikationscode durch die Auswertungseinheit.

In dem ersten Verfahrensschritt a) erfolgt das Erfassen der Bildpunkte auf der rückseitigen Oberfläche des Schlachttieres durch die Bilderfassungseinheit. Hierzu wird das Schlachttier, wie oben beschrieben, entlang der Rohrbahn, an der Bilderfassungseinheit derart vorbeigeführt, dass dessen rückseitige Oberfläche in dem Bilderfassungsbereich erfasst wird. Hierbei können entweder die gesamte rückseitige Oberfläche des Schlachttieres oder nur bestimmte, vorher festgelegt Abschnitte der rückseitigen Oberfläche in dem Bilderfassungsbereich erfasst werden.
In jedem Fall erfolgt die Erfassung der Bildpunkte derart, dass diese die, auf der rückseitigen Oberfläche des Schlachttieres vorhandenen, Markierungen beinhalten.

In dem zweiten Verfahrensschritt b) erfolgt das übertragbare Bereitstellen der Bildpunktdaten der Bildpunkte durch die Bilderfassungseinheit. Die bereitgestellten Bildpunktdaten beinhalten hierbei insbesondere die Flächen- und/oder Raumkoordinaten der Bildpunkte sowie deren Lichtintensitäts- und/oder Farbwerte.
Die Bildpunktdaten werden hierbei entweder einzeln oder zusammengefasst in einem Bildpunktdatensatz übertragbar bereitgestellt.

In Verfahrensschritt c) erfolgt anschließend die Erfassung der bereitgestellten Bildpunktdaten durch die Auswertungseinheit, wobei die Übertragung der Bildpunkte von der Erfassungseinheit zu der Auswertungseinheit drantlos oder drahtgebunden übe die entsprechende Verbindung erfolgen kann.

Verfahrensschritt d) sieht erfindungsgemäß vor, dass den Bildpunktdaten ein Schlachttieridentifikationscode zugeordnet wird.
Der Schlachttieridentifikationscode stellt hierbei einen Identifikationscode dar, welcher dem Schlachttier zu Beginn des Schlachttierverarbeitungsprozesses zugeordnet wird und welcher jederzeit eine eindeutige Identifizierung des Schlachttieres ermöglicht. Der Identifikationscode kann hierbei zum Beispiel eine fortlaufende Tiernummer sein.

Der Verfahrensschritt d) muss vorliegend nicht zwingend nach dem Verfahrensschritt c) ausgeführt werden. Vielmehr ist es auch möglich, den Verfahrensschritt d) beispielsweise nach dem Verfahrensschritt b) auszuführen. Die Durchführung des Verfahrensschrittes d) kann insbesondere durch die Auswertungseinheit erfolgen.

In dem Verfahrensschritt e) erfolgt das Bereitstellen der Markierungen als speicherbares Erfassungsergebnis mit zugeordnetem Schlachttieridentifikationscode durch die Auswertungseinheit.
Unter einem Bereitstellen der Markierungen als speicherbares Erfassungsergebnis wird in diesem Zusammenhang verstanden, dass die Markierungen derart bereitstellbar sind, dass diese entweder in der Auswertungseinheit selbst oder in einer externen Datenspeichereinheit abspeicherbar sind.
Die Speicherung der Markierungen dient insbesondere einer Archivierung der schlachttierbezogenen Daten und ermöglicht eine spätere Rückverfolgbarkeit des Schlachttieres.

Alle erfindungsgemäßen Verfahrensschritte sind als besonderer Vorteil in Echtzeit ausführbar, wodurch insbesondere eine In-Line-Einbindung des Verfahrens in einen laufenden Schlachttierverarbeitungsprozess ermöglicht wird, ohne dass es durch die Erfassung der schlachttierbezogenen Daten zu einer signifikanten Verzögerung des Schlachttierverarbeitungsprozesses kommt.

Zudem ermöglicht das Verfahren als besonderen Vorteil den Verzicht auf eine manuelle Erfassung durch entsprechendes Personal, wodurch insbesondere der Zeit- und Kostenaufwand für die Erfassung der schlachttierbezogenen Daten und gleichzeitig die Fehlerrate bei der Erfassung reduziert werden können.

Ein weiterer Vorteil des erfindungsgemäßen Verfahrens besteht darin, dass dieses mit bereits innerhalb des Schlachttierverarbeitungsprozesses vorhandenen, optischen Erfassungsvorrichtungen, beispielsweise solche zur Erfassung der spaltseitigen Oberfläche des Schlachttieres oder zur volumetrischen Vermessung eines Schlachttieres, ausführbar ist. Hierzu werden die beiden Schlachttierhälften vorteilhafterweise aufeinanderfolgend an der Rohrbahn geführt, wobei jeweils eine Schlachttierhälfte mit der Spaltseite, und die jeweils andere, zugehörige Schlachttierhälfte mit der Rückseite zu dem Bilderfassungsbereit der Bilderfassungeinheit ausgerichtet ist. Somit kann auf eine separate Bilderfassungs- und eine entsprechende, separate Auswertungseinheit verzichtet werden, wodurch insbesondere die Gesamtkosten für den Schlachttierverarbeitungsprozess niedrig gehalten werden können.
Die erfassten Markierungen können dann zum Beispiel direkt von den oben beschriebenen optischen Erfassungsvorrichtungen für Auswertungen genutzt werden.

In einer vorteilhaften Weiterbildung des Verfahrens erfolgt das Bereitstellen der Markierungen als speicherbares Erfassungsergebnis in Verfahrensschritt e) als Bild, insbesondere vorliegend in elektronischer Form als Bilddatei.

Die hier aufgeführte Weiterbildung weist insbesondere den Vorteil auf, dass eine beweissichere Archivierung möglich ist. Ferner können auch solche Markierungen, die nicht eindeutig erkannt werden können, durch Archvierung zunächst gesichert werden, wodurch eine eventuelle spätere Auswertung möglich bleibt. Zudem kann die Archivierung der schlachttierbezogenen Daten mit geringstmöglichem Kostenaufwand bereitgestellt werden, da vorliegend lediglich das Bild zusammen mit dem Schlachttieridentifikationscode für eine Archivierung gespeichert werden muss.

Ferner erfolgt in Verfahrensschritt e) durch die Auswertungseinheit eine Objekterkennung anhand der erfassten Bildpunktdaten, wobei diese Weiterbildung sowohl kumulativ als auch alternativ zu einer bloßen Archvierung als Bilddatei vorliegen kann.

Bei der Objekterkennung werden die Bildpunkte der vorhandenen Markierungen aus den Bildpunktdaten extrahiert und, beispielsweise anhand eines Klassifikators, die Art der Markierung ermittelt. Die Bereitstellung der Markierungen als speicherbares Erfassungsergebnis erfolgt in diesem Fall als Objekterkennungsergebnis, aus welchem die konkrete Art der Markierung hervorgeht.

Auf diese Weise können durch die Auswertungseinheit die schlachttierbezogenen Daten, beispielsweise der Zuchtbetrieb des Schlachttieres oder dessen Geschlecht, ermittelt und für die Archivierung oder zur Steuerung entsprechender, sich an die Erfassung der schlachttierbezogenen Daten anschließender, Verarbeitungsvorgänge innerhalb des Schlachttierverarbeitungsprozesses automatisch bereitgestellt werden. So ist es möglich, auf der Grundlage eines Objekterkennungsergebnisses mittels elektronischer Datenverarbeitung ein Steuersignal zu generieren, welches die Funktion beispielsweise einer Verarbeitungseinheit oder einer Transporteinheit beeinflusst, mittels dessen beispielsweise ein Schlachttier aus dem regulären Verarbeitungsprozess ausgeschleust und einer besonderen Verarbeitung oder Untersuchung zugeführt wird. Das Steuersignal kann sich auf unterschiedliche Schritte des Schlachttierverarbeitungspozesses wie beispielsweise auch auf eine Etikettierung beziehen.

Ferner ist es möglich, die Vorteile des Verfahrens gemäß dieser Weiterbildung dadurch besonders effizient zu nutzen, dass Markierungen als Träger relevanter Informationen, beispielsweise zur betrieblichen Herkunft, zum Geschlecht oder zur Verarbeitung vor oder insbesondere auch während des Schlachtungsprozesses aufgestempelt oder in ähnlicher Weise aufgebracht werden. Auf diese Weise kann, insbesondere in Verbindung mit der beschriebenen Objekterkennung und automatischen Erzeugung eines Steuersignals, der Schlachtverarbeitungsprozess gesteuert werden, ohne dass eine Dateneingabe in die Produktionssteuerung oder das elektronische Datenverarbeitungssystem erfolgen muss, was aus Zeitgründen, hygienischen Gründen oder aus Gründen der Betriebssicherheit häufig unvorteilhaft wäre. Als besonderer Vorteil kann so beispielsweise ein Mitarbeiter ohne Zugang zu einer Dateneingabeeinreichung bei Feststellung eines irregulären Zustands oder bei Feststellung einer bestimmten Eigenschaft eines Schlachttiers einfach eine Stempelaufdruck eines definierten Stempels aufbringen und so eine schlachttierbezogene Information an das elektronische Datenverarbeitungssystem übertragen oder eine bestimmte Verarbeitung oder Untersuchung auslösen. Der Stempel kann zugleich, insbesondere codiert, eine Informationen über die Identität des Mitarbeiters enthalten. Im einfachsten Fall kann auch durch Setzen einer Farbmarkierung einer vorher definierten Farbe eine Steuerung des Verarbeitungsprozesses vorgenommen werden.

Gemäß einer vorteilhaften Weiterbildung des Verfahrens schließt sich dem Verfahrensschritt e) ein Verfahrensschritt f) an. Im Verfahrensschritt f) wird das Erfassungsergebnis unter Zuordnung zu dem Schlachttieridentifikationscode archiviert. Vorzugsweise erfolgt die Archivierung in einer zentralen Datenbank des Schlachthofes in einem schlachttierbezogenen Datensatz. Das archivierte Erfassungsergebnis kann dabei sowohl als Bilddatei, als Objekterkennungsergebnis oder kumulativ in beiden Formen vorliegen.

Die Erfindung wird nachfolgend als Ausführungsbeispiel anhand einer Erfassung schlachttierbezogener Daten an einem Schlachtschwein näher erläutert.

Bei dem Schlachtschwein handelt es sich vorliegend um einen Eber, welcher im Zuge der Schlachtschweinverarbeitung mittels eines Schlagstempels entsprechend seines Geschlechts und seiner Herkunft gekennzeichnet wurde. Die Kennzeichnung liegt als Markierung auf der rückseitigen Oberfläche des Schlachttieres vor.

Das erfindungsgemäße Verfahren wird im hier aufgeführten Ausführungsbeispiel zu Beginn eines Schlachttierverarbeitungsprozesses im Rahmen einer Eingangskontrolle des Schlachttieres durchgeführt.

Die Durchführung des erfindungsgemäßen Verfahrens erfolgt mittels einer Bilderfassungseinheit mit einem Bilderfassungsbereich und mittels einer Auswertungseinheit, welche mit der Bilderfassungseinheit drahtlos verbunden ist.

In einem ersten Verfahrensschritt a) erfolgt durch die Bilderfassungseinheit in dem Bilderfassungsbereich ein Erfassen von Bildpunkten auf der rückseitigen Oberfläche des Schlachttieres. Hierbei wird das Schlachttier, geführt an einer Rohrbahn, so an der Bilderfassungseinheit vorbei geführt, dass der Abschnitt der rückseitigen Oberfläche, welcher die Markierung enthält, den Bilderfassungsbereich passiert und somit die Markierung in den erfassten Bildpunkten enthalten ist.

In einem sich anschließenden Verfahrensschritt b) werden Bildpunktdaten der erfassten Bildpunkte durch die Bilderfassungseinheit übertragbar bereitgestellt. Die Bildpunktdaten enthalten vorliegend die Flächenkoordinaten sowie einen Lichtintensitätswert des jeweiligen Bildpunktes.

Die bereitgestellten Bildpunktdaten werden anschließend in einem Verfahrensschritt c) von der Auswertungseinheit erfasst, wobei diese in einem weiteren Verfahrensschritt d) den Bildpunktdaten einen vorher festgelegten Schlachttieridentifikationscode zuordnet. Anhand des Schlachttieridentifikationscodes können das Schlachttier und die zugeordnete Markierung jederzeit einwandfrei identifiziert und rückverfolgt werden.
Der Schlachttieridentifikationscode wird vorliegend zu Beginn des Schlachttierverarbeitungsprozesses festgelegt und in der Auswertungseinheit hinterlegt.

Die in den Bildpunktdaten enthaltenen Markierungen des Schlachttieres werden in einem abschließenden Verfahrensschritt e) als speicherbares Erfassungsergebnis bereitgestellt und beispielsweise in einer Datenbank archiviert.

Gemäß einer vorteilhaften Ausführungsform des Verfahrens führt hierbei in Verfahrensschritt e) die Auswertungseinheit anhand der Bildpunktdaten eine Objekterkennung durch.
Innerhalb der Objekterkennung werden die für die Markierung zutreffenden Bildpunkte anhand deren Lichtintensitätswert ermittelt und die zugehörigen Flächenkoordinaten in ein, in die Auswertungseinheit einprogrammiertes, Flächenkoordinatensystem einbeschrieben.
Mittels eines Objekterkennungsalgorithmus ermittelt die Auswertungseinheit anschließend anhand der in das Flächenkoordinatensystem einbeschriebenen Bildpunkte die Form der Markierung und ordnet diese, beispielsweise unter Einbeziehen eines Klassifikators, einer entsprechenden Markierungsart, zum Beispiel eines gespeicherten Zuchtbetriebes oder einer Geschlechtskennzeichnung, zu. Die Auswertungseinheit ist somit in diesem Fall dazu in der Lage, anhand der erfassten Markierung die schlachttierbezogenen Daten des Schlachttieres, wie beispielsweise dessen Geschlecht und/oder Herkunftsort, automatisch zu ermitteln und die entsprechende Markierung mit dem zugeordneten Schlachttieridentifikationscode für eine Speicherung bereitzustellen.

Sämtliche Verfahrensschritte werden vorliegend in Echtzeit durchgeführt, sodass das Verfahren, als besonderer Vorteil, problemlos in einen bestehenden Schlachttierverarbeitungsprozess integriert werden kann, ohne dass dessen zeitlicher Ablauf durch das Erfassungsverfahren signifikant gestört wird.

## Patentansprüche

1. Verfahren zur Erfassung schlachttierbezogener Daten an einem geschlachteten Schlachttier mittels einer Bilderfassungseinheit, aufweisend einen Bilderfassungsbereich, in welchem eine rückseitige Oberfläche des Schlachttieres optisch erfassbar ist und in welchem Bildpunkte auf der rückseitigen Oberfläche des Schlachttieres erfassbar sind und wobei die Bilderfassungseinheit dazu in der Lage ist, Bildpunktdaten der Bildpunkte übertragbar bereitzustellen, und mittels einer Auswertungseinheit, welche mit der Bilderfassungseinheit verbunden ist und mit welcher die Bildpunktdaten erfassbar sind und welche dazu in der Lage ist, anhand der Bildpunktdaten Markierungen, die als Träger schlachttierbezogener Informationen auf der rückseitigen Oberfläche des Schlachttieres aufgebracht sind, zu erfassen und die erfassten Markierungen als speicherbares Erfassungsergebnis bereitzustellen,
aufweisend die nachfolgenden Verfahrensschritte:
a) Erfassen der Bildpunkte auf der rückseitigen Oberfläche des Schlachttieres in dem Bilderfassungsbereich durch die Bilderfassungseinheit, wobei die Bildpunkte die Markierungen beinhalten,
b) übertragbares Bereitstellen der Bildpunktdaten der Bildpunkte durch die Bilderfassungseinheit,
c) Erfassen der Bildpunktdaten durch die Auswertungseinheit,
d) Zuordnen eines Schlachttieridentifikationscodes zu den Bildpunktdaten,
e) Bereitstellen der Markierungen als speicherbares Erfassungsergebnis mit zugeordnetem Schlachttieridentifikationscode durch die Auswertungseinheit, wobei durch die Auswertungseinheit, anhand der Bildpunktdaten, eine Objekterkennung durchgeführt wird und wobei die Markierungen als speicherbares Objekterkennungsergebnis bereitgestellt werden
f1) automatisches Erzeugen eines Steuersignals aus dem speicherbaren Objekterkennungsergebnis durch die Auswertungseinheit, wobei mittels des Steuersignals ein Schlachtverarbeitungsprozess steuerbar ist.

2. Verfahren nach Anspruch 1,
wobei in Verfahrensschritt e) die Markierungen als speicherbares Bild bereitgestellt werden.

3. Verfahren nach einem der vorhergehenden Ansprüche,
wobei nach Verfahrenschritt e) ein zusätzlicher Verfahrensschritt f) durchgeführt wird, wobei das speicherbare Erfassungsergebnis unter Zuordnung des Schlachttieridentifikationscodes gespeichert wird.

## Claims

1. A method for recording slaughter-animal-related data on a slaughtered slaughter animal by means of an image acquisition unit which comprises an image acquisition range in which a rear surface of the slaughter animal is optically recordable and in which pixels are recordable on the rear surface of the slaughter animal, and wherein the image acquisition unit is capable of providing the pixel data of the pixels in a transferable manner, and by means of an evaluation unit which is connected to the image acquisition unit and which is capable of recording the pixel data and of recording, on the basis of the pixel data, markings which are applied to the rear surface of the slaughter animal as sources of slaughter-animal-related information, and of providing the recorded markings as a storable acquisition result,
comprising the following process steps:
a) recording of the pixels on the rear surface of the slaughter animal by the image acquisition unit in the image acquisition range, wherein the pixels contain the markings,
b) provision of the pixel data of the pixels in a transferable manner by the image acquisition unit,
c) recording of the pixel data by the evaluation unit,
d) assignment of a slaughter animal identification code to the pixel data,
e) provision of the markings as a storable acquisition result with the assigned slaughter animal identification code by the evaluation unit, wherein the evaluation unit carries out an object identification on the basis of the pixel data, and wherein the markings are provided as a storable object identification result,
f1) automatic generation of a control signal from the storable object identification result by the evaluation unit, wherein a slaughter processing operation can be controlled by means of the control signal.

2. The method according to claim 1,
wherein the markings are provided as a storable image in process step e).

3. The method according to one of the previous claims,
wherein an additional process step f) is taken after process step e), wherein the storable acquisition result is stored with the assigned slaughter animal identification code.

## Revendications

1. Procédé de saisie de données relatives à un animal de boucherie sur un animal de boucherie, au moyen d'une unité de saisie d'images qui comporte une zone de saisie d'images dans laquelle une zone arrière de l'animal de boucherie peut être saisie de manière optique et dans laquelle des points d'image peuvent être saisis sur la zone arrière de l'animal de boucherie, l'unité de saisie d'images étant capable de fournir de manière transmissible des données des points d'image, ainsi qu'au moyen d'une unité d'évaluation, qui est reliée à l'unité de saisie d'images et qui permet l'acquisition des données de points d'image, l'unité d'évaluation étant capable de détecter des marquages en tant que support d'informations relatives à l'animal de boucherie sur la zone arrière de l'animal de boucherie à l'aide des données de points d'image et de fournir les marquages saisis sous la forme d'un résultat de saisie enregistrable, comportant les suivantes étapes de procédé:
a) Saisie des points d'image sur la zone arrière de l'animal de boucherie dans la zone de saisie d'images par l'unité de saisie d'images, les points d'image comprenant les marquages,
b) mise à disposition de manière transmissible des données relatives aux points images par l'unité de saisie d'images,
c) acquisition des données de points d'image par l'unité d'évaluation,
d) attribution d'un code d'identification d'animal de boucherie aux données de points d'image,
e) mise à disposition des marquages sous la forme d'un résultat de saisie enregistrable avec le code d'identification d'animal de boucherie attribué par l'unité d'évaluation, cette unité d'évaluation effectuant une détection d'objet sur la base des données de points d'image et les marquages étant fournis en tant que résultat de détection d'objet enregistrable,
f1) génération automatique d'un signal de commande sur la base du résultat de détection d'objet mémorisable par l'unité d'évaluation, ce qui permet de contrôler un processus de boucherie au moyen du signal de commande.

2. Procédé suivant la revendication 1,
les marquages étant fournis en tant qu'image enregistrable dans l'étape de procédé e).

3. Procédé suivant l'une quelconque des revendications précédentes,
une étape de procédé supplémentaire f) étant effectuée après l'étape de procédé e), dans laquelle le résultat de saisie enregistrable est mémorisé en lui attribuant le code d'identification de l'animal de boucherie.
